(19)

Europäisches Patentamt
European Patent Office
Office européen des brevets

(11)  **EP 4 495 318 A1**

(12)  **EUROPEAN PATENT APPLICATION**
published in accordance with Art. 153(4) EPC

(43)  Date of publication:
22.01.2025  Bulletin 2025/04

(21)  Application number: 23770792.2

(22)  Date of filing: 14.03.2023

(51)  International Patent Classification (IPC):
$D06M\ 11/71^{(2006.01)}$     $C04B\ 35/80^{(2006.01)}$
$D06M\ 11/55^{(2006.01)}$     $D06M\ 11/65^{(2006.01)}$
$D06M\ 11/76^{(2006.01)}$     $D06M\ 11/79^{(2006.01)}$

(52)  Cooperative Patent Classification (CPC):
C04B 35/80; D06M 11/55; D06M 11/65;
D06M 11/71; D06M 11/76; D06M 11/79

(86)  International application number:
PCT/JP2023/009861

(87)  International publication number:
WO 2023/176837 (21.09.2023 Gazette 2023/38)

(84)  Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30)  Priority:  17.03.2022  JP 2022042764

(71)  Applicant: **Tosoh Corporation
Yamaguchi 746-8501 (JP)**

(72)  Inventors:
• **HIRATAKA, Yo
Ayase-shi, Kanagawa 252-1123 (JP)**
• **NAWATA, Yushi
Ayase-shi, Kanagawa 252-1123 (JP)**
• **OHTA, Ikuya
Ayase-shi, Kanagawa 252-1123 (JP)**
• **YAMASHITA, Isao
Ayase-shi, Kanagawa 252-1123 (JP)**

(74)  Representative: **Müller-Boré & Partner
Patentanwälte PartG mbB
Friedenheimer Brücke 21
80639 München (DE)**

(54)  **CERAMIC CONTINUOUS FIBER AND METHOD FOR PRODUCING SAME, AND CERAMIC MATRIX COMPOSITE MATERIAL INCLUDING SAME**

(57)  It is an object of the present disclosure to provide at least one of a continuous ceramic fiber in which the decrease in single fiber strength after exposure to a high temperature is inhibited, a method for producing the continuous ceramic fiber, a ceramic matrix composite using the continuous ceramic fiber and a method for producing the ceramic matrix composite.

The continuous ceramic fiber comprises a region containing at least one of ytterbium and lutetium on a surface of the continuous ceramic fiber.

EP 4 495 318 A1

**Description**

Technical Field

The present disclosure relates to a continuous ceramic fiber and a ceramic matrix composite containing the continuous ceramic fiber.

Background Art

To improve the strength and heat resistance of composites composed of continuous ceramic fibers and a ceramic matrix (hereinafter also referred to as "CMCs"), improvements in the strength and heat resistance of the continuous ceramic fibers constituting composites have been studied. For example, a continuous ceramic fiber having a surface with a coating layer of zirconia or lanthanum oxide (Patent Literature 1) and a continuous ceramic fiber having a surface with a coating layer of a rare-earth phosphate (Non Patent Literature 1) have been studied.

Citation List

Patent Literature

PTL 1: International Publication No. 2020/203484 Non Patent Literature
NPL 1: J. Am. Ceram. Soc. 91 7 (2008)2117-2123

Summary of Invention

Technical Problem

The continuous ceramic fiber having the coating layer of Patent Literature 1 had reduced strength due to heat resistance treatment. In the case of the continuous ceramic fiber having the coating layer of Non Patent Literature 1, thermal residual stress is applied to the continuous ceramic fiber due to the difference in thermal expansion coefficient between the coating layer and the continuous ceramic fiber. For this reason, when any of rare-earth phosphates was used for coating, the single fiber strength was low. Furthermore, the single fiber strength was reduced by the heat resistance treatment.
It is an object of the present disclosure to provide at least one of a continuous ceramic fiber in which the decrease in single fiber strength after exposure to a high temperature is inhibited, a method for producing the continuous ceramic fiber, a ceramic matrix composite using the continuous ceramic fiber and a method for producing the ceramic matrix composite.

Solution to Problem

The inventors have conducted studies on a material covering the surface of a continuous ceramic fiber. The inventors have focused on the type of element contained in the material covering the surface and have found that the incorporation of a certain rare-earth element significantly inhibits a deterioration in the strength of a continuous ceramic fiber due to exposure to a high temperature.
That is, the present invention is as described in the claims, and the gist of the present disclosure is described below.

[1] A continuous ceramic fiber comprising a region containing at least one of ytterbium and lutetium on a surface of the continuous ceramic fiber.
[2] The continuous ceramic fiber described in [1], in which the region has an average thickness of 50 nm or more.
[3] The continuous ceramic fiber described in [1] or [2], in which a presence proportion of the region is 10% or more.
[4] The continuous ceramic fiber described in any one of [1] to [3], in which the continuous ceramic fiber contains at least one of ytterbium and lutetium as an inorganic acid salt.
[5] The continuous ceramic fiber described in [4], in which the inorganic acid salt is one or more selected from the group consisting of a phosphate, a silicate, a nitrate, a carbonate and a sulfate.
[6] The continuous ceramic fiber described in any one of [1] to [5], in which the continuous ceramic fiber is one or more selected from the group consisting of a continuous silicon carbide fiber, a continuous alumina fiber, a continuous mullite fiber and a continuous alumina-mullite mixed fiber.
[7] The continuous ceramic fiber described in any one of [1] to [6], in which a single fiber strength is 1.0 GPa or more.

[8] A ceramic matrix composite, comprising the continuous ceramic fiber described in any one of [1] to [7].

[9] A method for producing a continuous ceramic fiber described in any one of [1] to [7], comprising the steps of bringing a continuous ceramic fiber into contact with a solution containing a salt containing at least one of ytterbium and lutetium, an organic acid and an inorganic acid, bringing the continuous ceramic fiber into contact with a protic solvent at 20°C or higher and 100°C or lower and heat-treating the continuous ceramic fiber.

[10] The method for producing a continuous ceramic fiber described in [9], in which the continuous ceramic fiber includes a region containing at least one of ytterbium and lutetium and having an average thickness of less than 50 nm on a surface of the continuous ceramic fiber.

[11] A method for producing a ceramic matrix composite, comprising a composite step of combining the continuous ceramic fiber described in any one of [1] to [7] with a ceramic matrix.

Advantageous Effects of Invention

The present disclosure achieves the above objects, that is, provides at least one of a continuous ceramic fiber in which the decrease in single fiber strength after exposure to a high temperature is inhibited, a method for producing the continuous ceramic fiber, a ceramic matrix composite using the continuous ceramic fiber and a method for producing the ceramic matrix composite.

Brief Description of Drawings

[Fig. 1] A SEM observation image of a surface of a continuous alumina fiber having a surface different composition region containing ytterbium phosphate of Example A6.

[Fig. 2] A SEM observation image of a cross section of a continuous alumina-mullite mixed fiber having a surface different composition region containing ytterbium phosphate in Example A2.

[Fig. 3] A TEM observation image of a continuous ceramic fiber obtained by treating a continuous alumina fiber having a surface different composition region containing lutetium phosphate of Example A5 in an air atmosphere at 1,200°C for 100 hours.

[Fig. 4] An elemental mapping of lutetium of a continuous ceramic fiber obtained by treating a continuous alumina fiber having a surface different composition region containing lutetium phosphate of Example A5 in an air atmosphere at 1,200°C for 100 hours.

Description of Embodiments

A continuous ceramic fiber of the present disclosure will be described with reference to an example of an embodiment. The terms used in the present embodiment are described below.

The term "ceramic matrix composite" (CMC) refers to a material in which a continuous ceramic fiber and a ceramic matrix are combined. The ceramic matrix composite is what is called a ceramic fiber-reinforced ceramic.

The term "ceramic matrix" refers to a ceramic serving as the matrix (base phase) of a CMC. The ceramic matrix is essentially the matrix (parent phase) of a CMC composed of ceramic crystal grains (hereinafter, also referred to simply as "crystal grains").

The term "ceramic fiber" refers to a spun polycrystalline ceramic or a fibrous polycrystalline ceramic, which are fibers composed of crystal grains. Ceramic fibers are classified into "single ceramic fibers" and "continuous ceramic fibers" on the basis of the length of the fibers. In the present embodiment, the term "single ceramic fiber" refers to a ceramic fiber having a fiber length of less than 500 um, and the term "continuous ceramic fiber" refers to a ceramic fiber other than the single ceramic fiber (ceramic fiber having a fiber length of 500 um or more).

The term "fiber bundle" refers to an assembly of two or more ceramic fibers.

The term "ceramic fiber cloth" refers to a woven fabric made of ceramic fibers, and in particular, a woven fabric made of continuous ceramic fibers. It may also be a woven fabric of fiber bundles of continuous ceramic fibers.

The term "surface different composition region" refers to a region that is present on the surface of a ceramic fiber and that has a different composition from the crystal grains constituting the ceramic fiber. The surface different composition region may be present on at least a part of the ceramic fiber, or may cover the entire surface of the ceramic fiber.

The term "presence proportion of the surface different composition region" (hereinafter, also referred to simply as a "presence proportion") refers to the proportion of the surface area of the surface different composition region in the area of the outermost surface of the ceramic fiber, the proportion being determined from a scanning electron microscope (hereinafter, also referred to as "SEM") observation image of the outermost surface of the ceramic fiber (hereinafter, also referred to as a "surface SEM observation image"). The proportion is a value calculated from the following formula (1).

$$\theta = 100 \times S/Sf \qquad (1)$$

In the above formula, $\theta$ is the presence proportion [%] of the surface different composition region. Sf is the area [$\mu m^2$] of the outermost surface of the ceramic fiber in the surface SEM observation image. S is the surface area [$\mu m^2$] of the surface different composition region in the surface SEM observation image. Sf and S may be determined by image analysis software (described below) used in a binarization process.

The outermost surface of a ceramic fiber is a portion that can be observed in a surface SEM observation image and does not include a surface that cannot be observed in a surface SEM observation image, for example, a portion where ceramic fibers in a fiber bundle or ceramic fiber cloth are in contact with each other.

The term "average thickness of a surface different composition region" (hereinafter, also referred to simply as an "average region thickness") refers to the average thickness of the surface different composition region present on the surface of the ceramic fiber, the average thickness being determined from the SEM observation image of a cross section of the ceramic fiber (hereinafter, also referred to as a "cross-sectional SEM observation image"). The average thickness is a value calculated from the following formula (2).

$$t_{ave} = (t_1 + t_2 + ... + t_n)/n \qquad (2)$$

In the above formula, $t_{ave}$ is the average thickness [nm] of the surface different composition region. $t_n$ is the thickness [nm] of the surface different composition region at each measurement point. n is the number of measurement points. With regard to the measurement of $t_n$, $t_n$ is determined by dividing the circumference of one ceramic fiber in the cross-sectional SEM observation image into 8 to 16 equal parts and measuring the thickness of the surface different composition region at each measurement point. The measurement points may be 50 $\pm$ 10 (n = 50 $\pm$ 10). $t_n$ may be determined by image analysis software (described below) used in the binarization process.

The term "coefficient of variation of the thickness of a surface different composition region" (hereinafter, also referred to simply as a "coefficient of variation") refers to the percentage [%] of the standard deviation of the thickness ($t_n$) of the surface different composition region at each measurement point with respect to the average thickness ($t_{ave}$) of the surface different composition region, the percentage being determined from a cross-sectional SEM observation image. The percentage is a value calculated from the following formula (3).

$$CV = 100 \times \sigma/t_{ave} \qquad (3)$$

In the above formula, CV [%] is the coefficient of variation. $\sigma$ [nm] is the standard deviation of $t_n$. $t_{ave}$ [nm] is the average thickness of the surface different composition region.

A surface SEM observation image and a cross-sectional SEM observation image are obtained by SEM observation using a typical scanning electron microscope (for example, JSM-7600F, manufactured by JEOL Ltd.) under the following conditions.

    Acceleration voltage: 5 kV
    Observation magnification: 5,000$\times$

For a surface SEM observation image, the surface of the ceramic fiber in the longitudinal direction is an observation surface, whereas for a cross-sectional SEM observation image, a cross section of a ceramic fiber is the observation surface. They are each placed on a carbon tape and then subjected to gold (Au) vapor deposition to provide a measurement sample.

Prior to the analysis of the surface different composition region, the surface SEM observation image and the cross-sectional SEM observation image may be subjected to binarization processing using typical image analysis software (for example, ImageJ, manufactured by the National Institutes of Health, USA). When it is difficult to distinguish between a ceramic fiber and a surface different composition region in a surface SEM observation image (for example, when the presence proportion is too high or too low), the presence of the surface different composition region can be determined by observing the boundary between the ceramic fiber and the surface different composition region using a cross-sectional SEM observation image.

The term "single fiber strength" refers to a value determined by a method in accordance with JIS R 1657 using a strength tester (for example, AG-XPlus, manufactured by Shimadzu Corporation) and a tensile test jig. The measurement sample is only required to have a gauge length of 25 mm. The tensile strength is measured 30 times at a loading rate of 0.5 mm/min, and the average value may be defined as the tensile strength.

The term "average particle size" refers to the median size ($D_{50}$) in the volume particle size distribution of a powder measured by a wet process.

The term "sintering inhibitor" refers to a substance that has the function of inhibiting the grain growth of crystal grains constituting a ceramic matrix during heat treatment.

The term "fiber volume fraction" refers to the volume fraction [% by volume] of a continuous ceramic fiber in a CMC. The fiber volume fraction is a value calculated from the following formula (4).

$$V~[\%~by~volume]~=~(V_f/V_{CMC})~\times~100~~~~(4)$$

In the above formula, V is the fiber volume fraction.

$V_f$ is the volume of the continuous ceramic fiber. $V_{CMC}$ is the volume of the CMC. $V_f$ and $V_{CMC}$ are calculated by the following formulae.

$$V_f~=~m/\rho_f$$

$$V_{CMC}~=~A~\times~B~\times~t$$

In the above formulae, m is the mass of the continuous ceramic fiber [g]. $\rho_f$ [g/cm$^3$] is the density of the continuous ceramic fiber. A [cm] is the length of the CMC. B [cm] is the width of the CMC. t [cm] is the thickness of the CMC.

The "density" is the measured density [g/cm$^3$] of a CMC, and is a value calculated from the rate [g/cm$^3$] of the volume measured by Archimedes' method to the mass measured with an electronic balance, by a method in accordance with JIS R 1634.

The "tensile strength" is a value determined by a method in accordance with JIS R 1656 using a strength tester (for example, AG-XPlus, manufactured by Shimadzu Corporation) and a tensile test jig. A measurement sample is only required to be a CMC having a shape of 10 ± 1 mm in width, 110 ± 10 mm in length and 2 ± 1 mm in thickness, with aluminum tabs attached to both ends. The tensile strength is measured twice at a loading rate of 0.5 mm/min, and the average value may be defined as the tensile strength.

<Continuous Ceramic Fiber Having Surface Different Composition Region>

A continuous ceramic fiber of the present embodiment is a continuous ceramic fiber comprising a region containing at least one of ytterbium and lutetium on a surface of the continuous ceramic fiber, and is preferably a continuous ceramic fiber having a surface different composition region that contains at least one of ytterbium and lutetium.

The continuous ceramic fiber is not particularly limited as long as it is a continuous fiber composed of ceramic, and is, for example, a continuous ceramic fiber containing one or more selected from the group consisting of silicon carbide, alumina and mullite. The continuous ceramic fiber is preferably a continuous ceramic fiber containing at least one of alumina and mullite. Specifically, the continuous ceramic fiber is, for example, one or more selected from the group consisting of a continuous silicon carbide fiber, a continuous alumina fiber, a continuous mullite fiber and a continuous alumina-mullite mixed fiber. Specific examples thereof even include one or more selected from the group consisting of a continuous alumina fiber, a continuous mullite fiber and a continuous alumina-mullite mixed fiber. From the viewpoint of strength, the continuous ceramic fiber is preferably an alumina fiber. From the viewpoint of heat resistance, the continuous ceramic fiber is preferably at least one of a continuous mullite fiber and a continuous alumina-mullite mixed fiber, more preferably a continuous alumina-mullite mixed fiber.

In the present embodiment, the term "continuous ceramic mixed fiber" refers to a continuous ceramic fiber containing a mixed microstructure of crystal grains of two or more types of ceramics. For example, the continuous alumina-mullite mixed fiber is a continuous ceramic fiber containing a mixed structure of alumina crystal grains and mullite crystal grains. An example of the continuous alumina-mullite mixed fiber can be a continuous fiber in which the ratio by mass of alumina ($Al_2O_3$) to mullite ($3Al_2O_3 \cdot 2SiO_2$) is 30 mass%:70 mass% to 55 mass%:45 mass%.

The continuous ceramic fiber can have a fiber diameter of, for example, 8 um or more or 10 um or more, and 18 um or less or 15 um or less, and is preferably 8 um or more and 18 um or less or 10 um or more and 15 um or less.

The continuous ceramic fiber is preferably at least one of a fiber bundle and a ceramic fiber cloth, more preferably a ceramic fiber cloth, and more preferably a ceramic fiber cloth in which fiber bundles of the continuous ceramic fiber are woven.

The ceramic fiber cloth can have a surface density of, for example, 250 g/m$^2$ or more or 500 g/m$^2$ or more, and 900 g/m$^2$ or less or 700 g/m$^2$ or less, and is preferably 250 g/m$^2$ or more and 900 g/m$^2$ or less, or 500 g/m$^2$ or more and 700 g/m$^2$ or less. The ceramic fiber cloth can have a thickness of, for example, 0.2 mm or more or 0.4 mm or more, and 1.0 mm or less or 0.6 mm or less, and is preferably 0.2 mm or more and 1.0 mm or less, or 0.4 mm or more and 0.6 mm or less.

The continuous ceramic fiber of the present embodiment comprises a region containing at least one of ytterbium and lutetium (hereinafter, also referred to as a "surface metal element") on a surface of the continuous ceramic fiber. That is, the continuous ceramic fiber of the present embodiment has a surface different composition region containing at least one of ytterbium and lutetium. Thereby, even when the continuous ceramic fiber of the present embodiment is exposed to a high temperature, a decrease in strength is less likely to occur. One of the reasons for this effect is thought to be that ytterbium and lutetium have the effect of inhibiting the growth of crystal grains constituting the continuous ceramic fiber due to exposure to a high temperature, and that this effect is greater than that of light rare-earth elements. Therefore, the continuous ceramic fiber of the present embodiment should be applicable to applications that require high strength even after exposure to a high temperature.

The surface different composition region is only required to contain a surface metal element, and an element contained in the surface different composition region may be the surface metal element only. The surface metal element is at least one of ytterbium (Yb) and lutetium (Lu). The surface metal element may be ytterbium or lutetium.

The surface metal element may be contained in the surface different composition region in any form, and is preferably contained as an inorganic acid salt. The inorganic acid salt may be an inorganic acid salt containing a surface metal element, or an inorganic acid salt of a surface metal element, and is preferably a salt that does not react with the continuous ceramic fiber and the matrix. The inorganic acid salt may be one or more selected from the group consisting of a phosphate, a silicate, a nitrate, a carbonate and a sulfate containing a surface metal element, and is preferably at least one of a phosphate and a silicate, more preferably a phosphate. Specifically, the inorganic acid salt is one or more selected from the group consisting of ytterbium phosphate ($YbPO_4$), lutetium phosphate ($LuPO_4$), ytterbium silicate ($Yb_2SiO_5$) and lutetium silicate ($Lu_2SiO_5$). The inorganic acid salt is preferably at least one of ytterbium phosphate and lutetium phosphate, more preferably ytterbium phosphate or lutetium phosphate. An example of ytterbium phosphate can be xenotime-type ytterbium phosphate. An example of lutetium phosphate can be xenotime-type lutetium phosphate.

The continuous ceramic fiber of the present embodiment preferably has a surface different composition region containing at least one of ytterbium and lutetium in the form of one or more selected from the group consisting of phosphate, silicate, nitrate, carbonate and sulfate. In this case, the continuous ceramic fiber of the present embodiment is more likely to have high single fiber strength after exposure to a high temperature.

The fact that the continuous ceramic fiber of the present embodiment has a surface different composition region containing at least one of ytterbium and lutetium in the form of one or more selected from the group consisting of phosphate, silicate, nitrate, carbonate and sulfate can be confirmed by the fact that the X-ray diffraction (hereinafter, also referred to as "XRD") pattern of the surface different composition region has an XRD peak corresponding to phosphate, silicate, nitrate, carbonate and sulfate containing at least one of ytterbium and lutetium.

The XRD measurement conditions in the present embodiment are described below.

Radiation source: Cu-K$\alpha$ radiation ($\lambda$ = 0.15418 nm)
Measurement mode: step scan
Scan speed: 0.04 °/second
Measurement range: 20 = 20° to 80°
Divergence slit: 2/3°
Scattering slit: 2/3°
Receiving slit width: 0.3 mm

The XRD measurement can be performed using a typical X-ray diffractometer (for example, Ultima III, manufactured by Rigaku Corporation).

The continuous ceramic fiber of the present embodiment may contain a surface metal element in the continuous ceramic fiber, that is, in the grain boundaries of the crystal grains constituting the continuous ceramic fiber. In this case, a decrease in strength when the continuous ceramic fiber of the present embodiment is exposed to a high temperature is more easily inhibited.

The presence of the surface metal element (hereinafter, also referred to as a "diffuse metal element") contained inside the continuous ceramic fiber can be confirmed using a transmission electron microscope (hereinafter, also referred to as "TEM") observation image of a cross section of the continuous ceramic fiber and elemental mapping by energy dispersive X-ray spectroscopy (hereinafter, also referred to as "EDS"). That is, crystal grains constituting the continuous ceramic fiber and the grain boundaries thereof are subjected to TEM observation and EDS analysis (TEM-EDS measurement). In the resulting elemental mapping, the presence of the diffuse metal element can be confirmed by the difference in the metal element contained in the crystal grains and their grain boundaries.

In the present embodiment, the TEM-EDS measurement is required to be performed using a typical transmission electron microscope (for example, JEM-2100F, manufactured by JEOL Ltd.) and an energy dispersive X-ray spectrometer (for example, JED-2300T, manufactured by JEOL Ltd.). The TEM observation conditions include the following conditions.

Acceleration voltage: 200 kV
Observation magnification: 1,000,000$\times$

The measurement sample used is a continuous ceramic fiber that has been subjected to carbon vapor deposition and then sliced with a focused ion beam. A cross section of the sliced fiber is required to be observed with the TEM.

In the continuous ceramic fiber of the present embodiment, the presence proportion of the surface different composition region is preferably 10% or more, 30% or more or 45% or more. In this case, the surface metal element is likely to be contained in the continuous ceramic fiber of the present embodiment, that is, in the grain boundaries of the crystal grains constituting the fiber. The presence proportion is preferably high, and can be, for example, 100% or less, 80% or less or 60% or less. A presence proportion of 100% corresponds to a state in which the entire surface of the continuous ceramic fiber is covered with the surface different composition region. The presence proportion of the surface different composition region is preferably 10% or more and 100% or less, 30% or more and 100% or less or 45% or more and 100% or less. The presence proportion of the surface different composition region is preferably 80% or more and 100% or less or 90% or more and 100% or less because the surface of the continuous ceramic fiber is substantially covered with the surface different composition region.

The surface different composition region of the continuous ceramic fiber of the present embodiment has an average thickness of, for example, 50 nm or more, 100 nm or more, 150 nm or more or 180 nm or more, and 1,000 nm or less, 500 nm or less, 300 nm or less or 250 nm or less. In this case, a decrease in the single fiber strength of the continuous ceramic fiber of the present embodiment after exposure to a high temperature is likely to be inhibited. The surface different composition region particularly preferably has an average thickness of, for example, 100 nm or more and 300 nm or less, 150 nm or more and 250 nm or less or 180 nm or more and 250 nm or less.

The coefficient of variation of the continuous ceramic fiber of the present embodiment can be, for example, 10% or more, 30% or more or 70% or more, and 200% or less, 150% or less or 100% or less, and is preferably 10% or more and 200% or less, 10% or more and 150% or less, 30% or more and 100% or less or 70% or more and 100% or less.

The single fiber strength of the continuous ceramic fiber of the present embodiment can be, for example, 1.0 GPa or more or 2.0 GPa or more, and 4.0 GPa or less or 3.0 GPa or less. The single fiber strength varies depending on the type of continuous ceramic fiber. Specifically, the single fiber strength of a continuous alumina fiber can be, for example, 2.0 GPa or more, 2.5 GPa or more or 2.8 GPa or more, and 4.0 GPa or less. The single fiber strength of a continuous alumina-mullite mixed fiber can be, for example, 1.0 GPa or more or 1.3 GPa or more, and 4.0 GPa or less or 3.0 GPa or less. The single fiber strength of the continuous alumina fiber is preferably 1.0 GPa or more and 4.0 GPa or less, more preferably 1.5 GPa or more and 3.0 GPa or less. The single fiber strength of the continuous alumina-mullite mixed fiber is preferably 2.0 GPa or more and 4.0 GPa or less.

The continuous ceramic fiber of the present embodiment preferably exhibits only a small change in single fiber strength after exposure to a high temperature. For example, when the continuous ceramic fiber of the present embodiment is subjected to treatment in an air atmosphere at 1,200°C for 100 hours (hereinafter, also referred to as "heat exposure treatment"), the ratio [%] of the single fiber strength [GPa] after the heat exposure treatment to the single fiber strength [GPa] before the heat exposure treatment (hereinafter, also referred to as a "strength retention ratio") is, for example, 65% or more, 75% or more, 80% or more or 85% or more, and 150% or less, 140% or less, 110% or less, 100% or less or 99% or less. Preferably, the strength retention ratio is, for example, 65% or more and 150% or less, 75% or more and 110% or less, 80% or more and 110% or less or 80% or more and 99% or less. The continuous ceramic fiber of the present embodiment may have a higher single fiber strength after the heat exposure treatment than the single fiber strength before the heat exposure treatment.

The single fiber strength of the continuous ceramic fiber of the present embodiment after heat exposure treatment can be, for example, 1.0 GPa or more or 1.3 GPa or more, and 3.0 GPa or less or 2.0 GPa or less. The single fiber strength after the heat exposure treatment varies depending on the type of continuous ceramic fiber. Specifically, the single fiber strength of a continuous alumina fiber can be, for example, 1.5 GPa or more, 2.0 GPa or more or 2.2 GPa or more, and 3.0 GPa or less. The single fiber strength of a continuous alumina-mullite mixed fiber can be, for example, 1.3 GPa or more or 1.5 GPa or more, and 2.0 GPa or less.

The continuous ceramic fiber of the present embodiment can be used for known applications of continuous ceramic fibers, and can be used as at least one of a fiber for high-temperature members and a fiber for reinforcing members. Furthermore, the continuous ceramic fiber can be used as a fiber for fiber-reinforced composites such as ceramic fiber-reinforced ceramics.

<Ceramic Matrix Composite (CMC)>

A CMC of the present embodiment is a ceramic containing a continuous ceramic fiber of the present embodiment. A CMC of the present embodiment is a fiber-reinforced ceramic containing the continuous ceramic fiber of the present embodiment. A CMC of the present embodiment is a composite of the continuous ceramic fiber of the present embodiment and a ceramic matrix.

A ceramic matrix (hereinafter, also referred to as a "matrix") is at least one of an oxide ceramic and a non-oxide ceramic, preferably an oxide ceramic, more preferably one or more selected from the group consisting of alumina, mullite, zirconia and silica, still more preferably one or more selected from the group consisting of alumina, mullite and silica and still further more preferably at least one of alumina and mullite. The ceramic matrix preferably contains at least alumina. An example of the non-oxide ceramic can be silicon carbide. From the viewpoint of strength, the matrix is preferably composed of alumina. From the viewpoint of heat resistance, the matrix is preferably at least one of alumina and mullite, more preferably mullite.

The matrix may be a matrix composed of the same type of ceramic as the continuous ceramic fiber, or may be a matrix composed of a different type of ceramic from the continuous ceramic fiber.

The CMC of the present embodiment may contain a sintering inhibitor (hereinafter, also referred to as an "inhibitor"). When the sintering inhibitor is contained, the grain growth of crystal grains constituting the matrix is easily inhibited.

The inhibitor may be an oxide containing at least one of a metal element and a metalloid element different from the matrix, and is preferably an oxide containing one or more selected from the group consisting of silicon, aluminum, germanium, zirconium, yttrium, titanium, hafnium, magnesium, scandium and lanthanoid elements, more preferably an oxide containing one or more selected from the group consisting of silicon, aluminum, zirconium, yttrium, titanium, magnesium, scandium and lanthanoid elements, and still more preferably an oxide containing one or more selected from the group consisting of silicon, aluminum and zirconium.

Specific examples of the inhibitor can include one or more selected from the group consisting of silica ($SiO_2$), alumina ($Al_2O_3$), germania ($GeO_2$), zirconia ($ZrO_2$), yttria ($Y_2O_3$), titania ($TiO_2$), hafnia ($HfO_2$), magnesia ($MgO$), scandia ($Sc_2O_3$), lanthanum oxide ($La_2O_3$), cerium oxide ($CeO_2$), praseodymium oxide ($Pr_2O_3$), neodymium oxide ($Nd_2O_3$), samarium oxide ($Sm_2O_3$), europium oxide ($Eu_2O_3$), gadolinium oxide ($Gd_2O_3$), terbium oxide ($Tb_2O_3$), erbium oxide ($Er_2O_3$), ytterbium oxide ($Yb_2O_3$), lutetium oxide ($Lu_2O_3$) and mullite ($3Al_2O_3 \cdot 2SiO_2$) The inhibitor is preferably one or more selected from the group consisting of silica, zirconia and mullite, more preferably contains at least silica and is further preferably silica.

The inhibitor content (hereinafter, also referred to as an "amount of inhibitor"), as the proportion by mass of the inhibitor in terms of oxide with respect to the mass of the CMC, can be, for example, 0.1 mass% or more or 0.2 mass% or more, and 2.0 mass% or less or 1.5 mass% or less, and is preferably 0.1 mass% or more and 1.5 mass% or less, or 0.2 mass% or more and 1.5 mass% or less. In the present embodiment, the mass of the CMC is the total mass of the matrix in terms of oxide, the inhibitor in terms of oxide and the continuous ceramic fiber.

The CMC of the present embodiment includes the continuous ceramic fiber of the present embodiment, the fiber having a surface different composition region containing a surface metal element. The continuous ceramic fiber of the present embodiment can be, for example, at least one of a continuous alumina fiber having a surface different composition region containing a surface metal element, and a continuous alumina-mullite mixed fiber having a surface different composition region containing a surface metal element.

The fiber volume fraction of the CMC of the present embodiment is, for example, 30% or more by volume and 60% or less by volume. When the fiber volume fraction satisfies this range, an appropriate amount of the continuous ceramic fiber is present in the CMC, and the shape of the CMC is easily maintained; thus, the CMC having high strength is likely to be obtained.

The density of the CMC of the present embodiment varies depending on the type of matrix or the like. For example, the density is 2.0 g/cm$^3$ or more and 3.2 g/cm$^3$ or less, or 2.5 g/cm$^3$ or more and 3.0 g/cm$^3$ or less.

The tensile strength of the CMC of the present embodiment varies depending on the types of matrix and continuous ceramic fiber. For example, the tensile strength can be 100 MPa or more or 115 MPa or more, and 300 MPa or less or 280 MPa or less. Specifically, the tensile strength of a CMC containing alumina serving as a matrix and a continuous alumina fiber serving as a continuous ceramic fiber can be, for example, 150 MPa or more, 200 MPa or more or 220 MPa or more, and 300 MPa or less, and is preferably 100 MPa or more and 300 MPa or less, or 200 MPa or more and 280 MPa or less. The tensile strength of a CMC containing mullite serving as a matrix and a continuous alumina-mullite mixed fiber serving as a continuous ceramic fiber can be, for example, 130 MPa or more or 140 MPa or more, and 200 MPa or less, and is preferably 130 MPa or more and 200 MPa or less.

The CMC of the present embodiment can be used for known CMC applications, and can be used for members containing the CMC, particularly for applications requiring heat resistance and for one or more selected from the group consisting of heat-resistant filters, turbine members and nuclear power-related members.

<Method for Producing Continuous Ceramic Fiber>

The continuous ceramic fiber of the present embodiment may be produced by any method as long as it has the above-mentioned characteristics.

A preferred method for producing the continuous ceramic fiber of the present embodiment can be, for example, a method for producing a continuous ceramic fiber, comprising the steps of bringing a continuous ceramic fiber into contact with a solution containing a salt containing at least one of ytterbium and lutetium, an organic acid and an inorganic acid (hereinafter, also referred to as a "first step"), bringing the continuous ceramic fiber into contact with a protic solvent at 20°C or higher and 100°C or lower (hereinafter, also referred to as a "second step") and heat-treating the continuous ceramic fiber (hereinafter, also referred to as a "third step").

In the production method of the present embodiment, the continuous ceramic fiber subjected to the first step can be, for example, at least one of a continuous ceramic fiber free of a surface different composition region and a continuous ceramic fiber having a surface different composition region, preferably a continuous ceramic fiber having a surface different composition region containing at least one of ytterbium and lutetium (surface metal element) and more preferably a continuous ceramic fiber having a surface different composition region that contains a surface metal element and that has an average thickness of less than 50 nm, i.e., a continuous ceramic fiber having a region that contains a surface metal element and that has an average region thickness of less than 50 nm on a surface of the continuous ceramic fiber.

Another preferred method for producing the continuous ceramic fiber of the present embodiment is, for example, a method for producing a continuous ceramic fiber, including the steps of bringing a continuous ceramic fiber having a surface different composition region that contains a surface metal element and that has an average region thickness of less than 50 nm into contact with a solution containing a salt containing a surface metal element, an organic acid and an inorganic acid, bringing the continuous ceramic fiber into contact with a protic solvent at 20°C or higher and 100°C or lower and heat-treating the continuous ceramic fiber.

In the first step, the continuous ceramic fiber is brought into contact with a solution containing a salt that contains a surface metal element, an organic acid, and an inorganic acid (hereinafter, also referred to as a "first salt solution"). The first salt solution contains the salt containing the surface metal element, the organic acid, and the inorganic acid. Thereby, metal ions originating from the salt, the organic acid, and the inorganic acid are attached to the surface of the continuous ceramic fiber.

The salt containing the surface metal element in the first salt solution may be any salt of the surface metal element. The salt is, for example, one or more selected from the group consisting of a chloride, a phosphate, a silicate, a nitrate, a carbonate and a sulfate containing the surface metal element, preferably at least one of a chloride and a nitrate, and more preferably a nitrate. Specifically, the salt is, for example, one or more selected from the group consisting of ytterbium chloride ($YbCl_3$), lutetium chloride ($LuCl_3$), ytterbium nitrate ($Yb(NO_3)_3$), lutetium nitrate ($Lu(NO_3)_3$), ytterbium sulfate ($Yb_2(SO_4)_3$), lutetium sulfate ($Lu_2(SO_4)_3$), ytterbium carbonate ($Yb_2(CO_3)_3$) and lutetium carbonate ($Lu_2(CO_3)_3$), preferably one or more selected from the group consisting of ytterbium chloride, lutetium chloride, ytterbium nitrate and lutetium nitrate, more preferably at least one of ytterbium nitrate and lutetium nitrate, and still more preferably ytterbium nitrate or lutetium nitrate.

The concentration of the salt in the first salt solution can be, for example, 5% or more by mass or 10% or more by mass, and 50% or less by mass or 30% or less by mass.

Any organic acid that enhances the dispersibility of the salt may be used for the first salt solution. The organic acid is, for example, one or more selected from the group consisting of citric acid, lactic acid, glycolic acid, serine and threonine, preferably one or more selected from the group consisting of citric acid, lactic acid and glycolic acid, and more preferably citric acid.

Any inorganic acid that reacts with the surface metal element in an ionic state contained in the salt to form an inorganic acid salt may be used for the first salt solution. The inorganic acid is preferably at least one of phosphoric acid and silicic acid, more preferably phosphoric acid.

The first salt solution contains a solvent. The solvent is freely selected. For example, the solvent is a protic solvent. The solvent is preferably at least one of water and ethanol, more preferably water.

A contact method in the first step may be freely selected as long as the metal ions originating from the salt, the organic acid and the inorganic acid are attached to the surface of the continuous ceramic fiber having the continuous ceramic fiber. The contact method can be, for example, to mix the first salt solution with the continuous ceramic fiber, or to impregnate the continuous ceramic fiber with the first salt solution. For example, such treatment is performed under the following conditions.

Mixing temperature: 0°C or higher or 4°C or higher, and 40°C or lower or 30°C or lower.

Mixing time: 5 minutes or more or 10 minutes or more, and 2 hours or less or 1 hour or less.

The mixing temperature is only required to be set to a temperature lower than or equal to a temperature at which metal ions derived from the salt do not precipitate in the form of an inorganic acid salt.

In the second step, the continuous ceramic fiber obtained in the first step is brought into contact with the protic solvent at a temperature of 20°C or higher and 100°C or lower. This causes nucleation and growth of the inorganic acid salt on the surface of the continuous ceramic fibers.

The protic solvent used in the second step is freely selected. The protic solvent is, for example, one or more selected from the group consisting of water, ethanol and isopropanol, preferably at least one of water and ethanol, and more preferably water.

The contact method in the second step may be freely selected as long as nucleation and growth of the inorganic acid salt occur on the surface of the continuous ceramic fiber. The contact method can be, for example, to mix the protic solvent with the continuous ceramic fiber, or to impregnate the continuous ceramic fiber with the protic solvent. For example, such treatment is performed under the following conditions.

Treatment temperature: 20°C or higher or 40°C or higher, and 100°C or lower or 70°C or lower.

Treatment time: 1 minute or more or 5 minutes or more, and 24 hours or less or 1 hour or less.

The treatment temperature is only required to be a temperature at which the metal ions originating from the salt react with the inorganic acid to precipitate an inorganic acid salt.

After the treatment, the continuous ceramic fiber may be washed with water or the like to remove the excess of the inorganic acid. For example, a washing method can be to allow the continuous ceramic fiber to stand in a sufficient amount of water and then remove it from the water.

In the third step, the continuous ceramic fiber having an inorganic acid salt precipitated on its surface obtained in the second step is heat-treated. Thereby, the organic acid is sufficiently decomposed, and the inorganic acid salt is densified, resulting in a continuous ceramic fiber having a surface different composition region according to the present embodiment.

The heat treatment in the third step is freely selected as long as the organic acid is sufficiently decomposed. The heat treatment may be performed under the following conditions.

Heat treatment atmosphere: oxidizing atmosphere or inert atmosphere, preferably air atmosphere.

Heat treatment temperature: 500°C or higher, 600°C or higher, 800°C or higher or 900°C or more, and 1,500°C or lower, 1,350°C or lower or 1,200°C or lower.

Heat treatment time: 30 minutes or more or 1 hour or more, and 24 hours or less or 12 hours or less.

Number of heat treatment cycles: 1 or more and 5 or less.

When the heat treatment temperature is 500°C or higher in the third step, the amounts of the organic acid and the inorganic acid remaining in the surface different composition region decrease, thereby easily increasing the single fiber strength of the continuous ceramic fiber of the present embodiment after exposure to a high temperature. When the heat treatment temperature is 1,500°C or lower, the grain growth of the crystal grains constituting the continuous ceramic fiber is inhibited, thereby easily increasing the single fiber strength of the continuous ceramic fiber of the present embodiment after exposure to a high temperature.

The production method of the present embodiment may be repeated from the first step to the third step. For example, the production method of the present embodiment can include one to five repetitions of the first to third steps.

Another preferred method for producing the continuous ceramic fiber of the present embodiment is, for example, a method for producing a continuous ceramic fiber, including the steps of bringing a continuous ceramic fiber having a surface different composition region that contains a surface metal element and that has an average region thickness of less than 50 nm into contact with a solution containing a salt containing a surface metal element, an organic acid and an inorganic acid, bringing the continuous ceramic fiber into contact with a protic solvent at 20°C or higher and 100°C or lower and heat-treating the continuous ceramic fiber.

The method for producing the continuous ceramic fiber having the surface different composition region that contains the surface metal element and that has an average region thickness of less than 50 nm is freely selected. A preferred production method is, for example, a method for producing a continuous ceramic fiber, the method including the steps of: bringing a continuous ceramic fiber into contact with a solution containing a coupling agent (hereinafter, also referred to as a "fourth step"), heat-treating the continuous ceramic fiber at 50°C or higher (hereinafter, also referred to as a "fifth step"), bringing the continuous ceramic fiber into contact with a solution containing a salt containing a surface metal element (hereinafter, also referred to as a "sixth step") and heat-treating the continuous ceramic fiber (hereinafter, also referred to as a "seventh step").

In the fourth step, the continuous ceramic fiber is brought into contact with the solution containing the coupling agent (hereinafter, also referred to as a "coupling solution"). This promotes chemical adsorption of the coupling agent onto the surface of the continuous ceramic fiber, resulting in a continuous ceramic fiber having the coupling agent adsorbed thereon.

The coupling agent is preferably at least one of a phosphonic acid derivative and an alkoxysilane derivative, more preferably a phosphonic acid derivative. Specifically, the phosphonic acid derivative can be, for example, one or more selected from the group consisting of aminomethylphosphonic acid ($H_2NCH_2PO(OH)_2$), 2-aminoethylphosphonic acid ($H_2NCH_2CH_2PO(OH)_2$), 3-aminopropylphosphonic acid ($H_2NCH_2CH_2CH_2PO(OH)_2$), N-(phosphonomethyl)glycine ($HOOCCH_2NHCH_2PO(OH)_2$), 4-aminobenzylphosphonic acid, hydroxymethylphosphonic acid ($HOCH_2PO(OH)_2$), 2-hydroxyethylphosphonic acid ($HOCH_2CH_2PO(OH)_2$) and phosphonoacetic acid ($HOCOCH_2PO(OH)_2$). The alkoxysilane derivative can be, for example, one or more selected from the group consisting of 3-methacryloxypropylmethyldimethoxysilane ($H_2CCCH_3COOC_3H_6SiCH_3(OCH_3)_2$, N-2-(aminoethyl)-3-aminopropylmethyldimethoxysilane ($H_2NC_2H_4NHC_3H_6SiCH_3(OCH_3)_2$, N-2-(aminoethyl)-3-aminopropyltrimethoxysilane ($H_2NC_2H_4NHC_3H_6Si(OCH_3)_3$), 3-aminopropyltrimethoxysilane ($H_2NC_3H_6Si(OCH_3)_3$) and 3-aminopropyltriethoxysilane ($H_2NC_3H_6Si(OCH_2CH_3)_3$). The coupling agent is preferably one or more selected from the group consisting of aminomethylphosphonic acid, 2-aminoethylphosphonic acid, 3-aminopropylphosphonic acid, N-(phosphonomethyl)glycine, 4-aminobenzylphosphonic acid, hydroxymethylphosphonic acid, 2-hydroxyethylphosphonic acid and phosphonoacetic acid, more preferably one or more selected from the group consisting of aminomethylphosphonic acid, N-(phosphonomethyl)glycine and phosphonoacetic acid, and still more preferably contains at least phosphonoacetic acid.

The solvent for the coupling solution is not particularly limited as long as the coupling agent is soluble in the solvent. The solvent is, for example, one or more selected from the group consisting of methanol, ethanol, propanol, acetone, tetrahydrofuran and benzene, preferably one or more selected from the group consisting of methanol, ethanol and propanol, and more preferably at least one of methanol and ethanol.

The coupling solution is preferably free of metal ions.

The concentration of the coupling agent in the coupling solution can be, for example, 3 mmol% or more or 5 mmol% or more, and 30 mmol% or less or 20 mmol% or less.

A contact method is freely selected as long as it is a method in which a coupling reaction on the surface of the continuous ceramic fiber, such as a coupling reaction between the phosphorus of phosphonoacetic acid and the surface hydroxy group of the continuous ceramic fiber, proceeds. The contact method can be, for example, mixing the coupling solution with the continuous ceramic fiber, or impregnating the continuous ceramic fiber with the coupling solution. For example, such treatment is performed under the following conditions.

Mixed temperature: 0°C or higher or 10°C or higher, and 40°C or lower or 35°C or lower.
Mixed time: 1 hour or more or 3 hours or more, and 100 hours or less or 24 hours or less.

In the fifth step, the continuous ceramic fiber having the chemically adsorbed coupling agent obtained in the fourth step is heat-treated at 50°C or higher. This stabilizes the coupling agent chemically adsorbed on the surface of the continuous ceramic fiber.

The heat treatment in the fifth step is only required to be performed under conditions that stabilize the coupling agent chemically adsorbed on the surface of the continuous ceramic fiber. For example, the heat treatment conditions include the following conditions.

Heat treatment atmosphere: oxidizing atmosphere or inert atmosphere, preferably air atmosphere.
Heat treatment temperature: 50°C or higher or 120°C or higher, and 300°C or lower, 250°C or lower or 200°C or lower.
Heat treatment time: 1 hour or more or 3 hours or more, and 100 hours or less or 24 hours or less.
Number of heat treatment cycles: 1 or more and 5 or less.

In the sixth step, the continuous ceramic fiber obtained in the fifth step is brought into contact with the solution (hereinafter, also referred to as a "second salt solution") containing the salt containing the surface metal element. In the sixth step, metal ions originating from the salt are coordinated with the coupling agent, resulting in a continuous ceramic fiber having, on its surface, the coupling agent coordinated with the metal ions.

The salt contained in the second salt solution is preferably the same salt as that used in the first step, preferably a salt containing the surface metal element, and more preferably a salt of the surface metal element. Specifically, the salt is, for example, one or more selected from the group consisting of ytterbium chloride ($YbCl_3$), lutetium chloride ($LuCl_3$), ytterbium nitrate ($Yb(NO_3)_3$), lutetium nitrate ($Lu(NO_3)_3$), ytterbium sulfate ($Yb_2(SO4)_3$), lutetium sulfate ($Lu_2(SO_4)_3$), ytterbium carbonate ($Yb_2(CO_3)_3$) and lutetium carbonate ($Lu_2(CO_3)_3$), preferably one or more selected from the group consisting of ytterbium chloride, lutetium chloride, ytterbium nitrate and lutetium nitrate, more preferably at least one of ytterbium nitrate and lutetium nitrate, and still more preferably ytterbium nitrate or lutetium nitrate.

The solvent in the second salt solution is not particularly limited as long as the salt is soluble in the solvent. The solvent is, for example, one or more selected from the group consisting of methanol, ethanol, propanol, acetone, tetrahydrofuran and benzene, preferably one or more selected from the group consisting of methanol, ethanol and propanol, and more preferably at least one of methanol and ethanol.

The concentration of the salt in the second salt solution can be, for example, 1 mmol% or more or 3 mmol% or more, and 30 mmol% or less or 20 mmol% or less.

A contact method in the sixth step is freely selected as long as the coordination reaction of the metal ions with the coupling agent, preferably phosphonoacetic acid, proceeds. The contact method can be, for example, mixing the continuous ceramic fiber obtained in the fifth step with the second salt solution, or impregnating the continuous ceramic fiber obtained in the fifth step with the second salt solution. For example, such treatment is performed under the following conditions.

Mixing temperature: 50°C or higher or 60°C or higher, and 120°C or lower or 80°C or lower.
Mixing time: 1 hour or more or 2 hours or more, and 24 hours or less or 12 hours or less.

The mixing is preferably performed while heating is performed to a temperature near the boiling point of the solvent because the metal ions are more likely to coordinate with the coupling agent.

The continuous ceramic fiber after the mixing treatment may be washed with ethanol or the like to remove the excess of the salt. For example, a washing method can be to allow the continuous ceramic fiber to stand in a sufficient amount of ethanol and then remove it from the ethanol.

In the seventh step, the continuous ceramic fiber obtained in the sixth step is heat-treated. Thereby, the coupling agent chemically adsorbed onto the continuous ceramic fiber is decomposed, and the organic components derived from the coupling agent are removed. This results in a continuous ceramic fiber having a surface different composition region that contains the surface metal element and that has an average region thickness of less than 50 nm.

The heat treatment in the seventh step is only required to be performed under conditions that allow the coupling agent chemically adsorbed on the ceramic continuous fibers to decompose. The heat treatment may be performed under the following conditions.

Heat treatment atmosphere: oxidizing atmosphere or inert atmosphere, preferably air atmosphere.
Heat treatment temperature: 400°C or higher, 800°C or higher or 900°C or higher, and 1,700°C or lower, 1,450°C or lower, 1,400°C or lower or 1,200°C or lower.
Heat treatment time: 30 minutes or more or 1 hour or more, and 24 hours or less or 12 hours or less.
Number of heat treatment cycles: 1 or more and 5 or less.

The heat treatment temperature is only required to be a temperature at which the coupling agent chemically adsorbed on the continuous ceramic fiber is decomposed and which is lower than or equal to the melting point of the continuous ceramic fiber.

<Method for Producing Ceramic Matrix Composite (CMC)>

A method for producing a ceramic matrix composite of the present embodiment can be, for example, a production method comprising a composite step of combining the continuous ceramic fiber of the present embodiment with a ceramic matrix.

A composite method is freely selected. A preferred method is, for example, a method for producing a CMC, the method including a step of mixing a slurry containing a ceramic matrix source with the continuous ceramic fiber of the present embodiment to prepare a mixture, a step of solidifying the mixture to provide a green body and a step of firing the green body.

The production method of the present embodiment includes a step of mixing a slurry (hereinafter, also referred to as a "matrix slurry") containing a ceramic matrix source (hereinafter, also referred to as a "matrix source") with the continuous ceramic fiber to prepare a mixture.

The matrix source is only required to be the matrix of the CMC or a precursor thereof, is preferably one or more selected from the group consisting of alumina, mullite, zirconia and silica, and more preferably at least one of $\alpha$-alumina and mullite.

The matrix source may be in any form as long as it is in a state that allows it to disperse in the matrix slurry. The matrix source is preferably in the form of at least one of a powder and colloidal particles, more preferably in the form of a powder, still more preferably in the form of one or more selected from the group consisting of an alumina powder, a mullite powder, a zirconia powder, and a silica powder and still further more preferably in the form of at least one of an $\alpha$-alumina powder and a mullite powder.

The average particle size of the matrix source is preferably 0.01 um or more or 0.1 um or more, and 5 um or less or 3 um or less. When the average particle size satisfies this range, the matrix source is easily dispersed uniformly around the continuous ceramic fiber.

The matrix slurry may contain a sintering inhibitor source (hereinafter, also referred to as an "inhibitor source"). The inhibitor source is only required to be a compound containing at least one of a metal element and a metalloid element different from the matrix source. The inhibitor source is, for example, a compound containing one or more selected from the group consisting of silicon, aluminum, germanium, zirconium, yttrium, titanium, hafnium, magnesium, scandium and lanthanoid elements (hereinafter, also referred to as "silicon or the like"). The inhibitor source is only required to be one or more compounds selected from the group consisting of oxides, hydroxides, oxyhydroxides, oxynitrides, nitrides, oxycarbides, carbides, chlorides, carbonates, nitrates, sulfates, and acetates of silicon or the like, and is preferably an oxide.

For example, the inhibitor source can be preferably one or more selected from the group consisting of silica, alumina, zirconia, yttria, titania, magnesia, scandia, lanthanum oxide, cerium oxide, praseodymium oxide, neodymium oxide, samarium oxide, europium oxide, gadolinium oxide, terbium oxide, erbium oxide, ytterbium oxide, lutetium oxide and mullite, and is preferably one or more selected from the group consisting of silica, zirconia and mullite.

The inhibitor source is preferably in the form of at least one of a powder and colloidal particles, more preferably a powder. Specifically, the inhibitor source is preferably one or more selected from the group consisting of a silica powder, an alumina powder, a zirconia powder, an yttria powder, a titania powder, a magnesia powder, a scandia powder, a lanthanum oxide powder, a cerium oxide powder, a praseodymium oxide powder, a neodymium oxide powder, a samarium oxide powder, a europium oxide powder, a gadolinium oxide powder, a terbium oxide powder, an erbium oxide powder, an ytterbium oxide powder, a lutetium oxide powder and a mullite powder, more preferably one or more selected from the group consisting of a silica powder, a zirconia powder and a mullite powder.

The average particle size of the inhibitor source can be, for example, 0.01 um or more or 0.04 um or more, and 10 um or less or 8 um or less.

The inhibitor source content of the matrix slurry (hereinafter, also referred to as the "amount of the inhibitor source") can be, for example, 1.0 mass% or more or 1.5 mass% or more, and 3.5 mass% or less or 3.0 mass% or less, based on the total mass of the metal element and the metalloid element contained in the matrix source in terms of oxides and the metal element and the metalloid element contained in the inhibitor source in terms of oxides. The amount of the inhibitor source is the ratio by mass [mass%] of the metal element and the metalloid element contained in the inhibitor source in terms of oxides to the total mass of the metal element and the metalloid element contained in the matrix source in terms of oxides and the metal element and the metalloid element contained in the inhibitor source in terms of oxides. For example, in the case of a matrix slurry in which the inhibitor source is silica and the matrix source is alumina, the amount of the inhibitor source can be determined from {(mass of silica [g])/(mass of silica + mass of alumina) [g]} $\times$ 100.

The solvent contained in the matrix slurry is only required to be a solvent in which the matrix source and the inhibitor source disperse. The solvent can be, for example, water, methanol, ethanol, 1-propanol, 2-propanol, 1-butanol, 2-butanol, butyl alcohol, isobutyl alcohol, acetone, methyl ethyl ketone, methyl isobutyl ketone, diisobutyl ketone, cyclohexanone, diacetone alcohol, benzene, toluene, xylene, ethyl acetate, methyl acetate, butyl acetate, methoxybutyl acetate, isobutyl acetate, normal hexane, heptane, cyclohexane, methylcyclohexane, ethylene glycol, and ethylene glycol monomethyl ether, ethylene glycol monoethyl ether, ethylene glycol monobutyl ether, propylene glycol monomethyl ether, N,N-dimethylformamide, tetrahydrofuran, N-methyl-2-pyrrolidone, 1,4-dioxane and styrene. The solvent can be, for example, one or more selected from the group consisting of water, methanol, ethanol, 1-propanol, 2-propanol, 1-butanol, 2-butanol, butyl alcohol and isobutyl alcohol. The solvent is preferably one or more selected from the group consisting of water and ethanol, more preferably water.

The solid concentration of the matrix slurry can be, for example, 30% or more by mass or 40% or more by mass, and 90% or less by mass or 85% or less by mass. The solid concentration of the matrix slurry is the ratio [mass%] of the mass of the metal element and the metalloid elements contained in the matrix source in terms of oxides to the total mass of the metal element and the metalloid element contained in the matrix source in terms of oxides and the solvent. When the matrix slurry contains an inhibitor, the solid concentration of the matrix slurry is the ratio [mass%] of the total mass of the metal element and the metalloid element contained in the matrix source in terms of oxides and the metal element and the metalloid element contained in the inhibitor source in terms of oxides to the total mass of the metal element and the metalloid element contained in the matrix source in terms of oxides, the metal element and the metalloid element contained in the inhibitor source in terms of oxides and the solvent. For example, in the case of a matrix slurry in which the matrix source is alumina, the inhibitor source is silica, and the solvent is water, the solid concentration can be determined from {(mass of alumina [g] + mass of silica [g])/(mass of alumina + mass of silica + mass of water) [g]} $\times$ 100. The solid concentration can also be determined as the ratio by mass of the remainder after the evaporation of the solvent in the matrix slurry to the mass of the matrix slurry.

A method for producing the matrix slurry is freely selected as long as a matrix source and a solvent are mixed. The matrix slurry is preferably prepared by grinding and mixing. Specifically, for example, a matrix source and a solvent can be mixed and ground in a ball mill. When the matrix slurry contains an inhibitor source, for example, a matrix source, the inhibitor source and a solvent can be mixed and ground in a ball mill. The balls used in the ball mill are required to be balls that can eliminate slow aggregation of the matrix source and the inhibitor source, and are required to be ceramic balls larger than the average particle size of the matrix source and the like. Examples of such balls can include ceramic balls having a diameter of 0.5 mm or more and 20 mm or less, or 1 mm or more and 15 mm or less. The ceramic balls are required to be at least one of alumina balls and zirconia balls, or alumina balls.

The mixing time may be freely changed in accordance with the amount fed and the target particle size, and is, for example, 12 hours or more and 72 hours or less.

The continuous ceramic fiber is only required to be a continuous ceramic fiber of the present embodiment. The continuous ceramic fiber can be, for example, at least one of a continuous alumina fiber having a surface different composition region containing a surface metal element and a continuous alumina-mullite mixed fiber having a surface different composition region containing a surface metal element.

The production method of the present embodiment includes a step of mixing a matrix slurry with a continuous ceramic fiber to prepare a mixture (hereinafter, also referred to as a "mixing step"). The mixing method is freely selected. For example, the method can be to impregnate the continuous ceramic fiber with the matrix slurry. Specifically, the method can be, for example, at least one of vacuum impregnation treatment and pressure impregnation treatment.

For example, the vacuum impregnation treatment is performed under the following conditions.

Impregnation atmosphere: vacuum degree of 85% or more or vacuum degree of 90% or more, and vacuum degree of 100% or less, vacuum degree of less than 100% or vacuum degree of 99% or less.
Impregnation temperature: 0°C or higher or 10°C or higher, and 40°C or lower or 35°C or lower

For example, the pressure impregnation treatment is performed under the following conditions.

Impregnation pressure: 0.11 MPa or more or 0.15 MPa or more, and 2.0 MPa or less or 1.8 MPa or less.
Impregnation temperature: 0°C or higher or 10°C or higher, and 40°C or lower or 35°C or lower.

Specifically, the mixing method can be, for example, to impregnate the continuous ceramic fiber with the matrix slurry at 0°C or higher and 35°C or lower and under a vacuum of 95% or higher and less than 100%.

The production method of the present embodiment includes a step of solidifying the mixture to provide a green body (hereinafter, also referred to as a "forming step"). This results in the green body that serves as a precursor of the CMC of the present embodiment. The formation method is only required to be a method that allows the mixture to have a fixed shape. The formation method can be, for example, one or more selected from the group consisting of heat treatment, freezing treatment and additive treatment. The forming step may be a combination of the above-mentioned methods, or the same treatment may be performed multiple times.

For example, the heat treatment is performed under the following conditions.

Heat treatment temperature: 50°C or higher, 60°C or higher or 80°C or higher, and 160°C or lower or 140°C or lower.
Number of heat treatment cycles: 1 or more and 5 or less.

The heat treatment time may be freely adjusted in accordance with the amount of the mixture treated and the heat treatment temperature. The heat treatment time is, for example, 1 hour or more and 10 hours or less, or 2 hours or more and 8 hours or less.

For example, the freezing treatment is performed under the following conditions.

Freezing temperature: -200°C or higher or -180°C or higher, and -20°C or lower or -30°C or lower.
Sublimation pressure: 0.001 MPa or more or 0.002 MPa or more, and 0.05 MPa or less or 0.03 MPa or less.
Number of treatment cycles: 1 or more and 5 or less.

When the freezing treatment is performed multiple times, the freezing temperature and the sublimation pressure may be set to any desired conditions.

The additive treatment is, for example, treatment to mix an additive, such as a solidifying agent or a binder, with the mixture and form the mixture into a shape. The additive may be any of known additives that can be used in the production of CMC. The additive can be, for example, one or more selected from the group consisting of agar, gelatin, methylcellulose, camphene, sodium alginate, 2-hydroxyethyl acrylate, 4-hydroxybutyl acrylate, 6-hydroxyhexyl acrylate, acrylic acid, methacrylic acid, acrylamide, N,N'-methylenebisacrylamide, N,N'-ethylenebisacrylamide methacrylamide, polyethylene glycol diacrylate, methyl acrylate, methyl methacrylate, ethyl acrylate, ethyl methacrylate, butyl acrylate, urea, boron nitride (BN), aluminum nitride (AlN), silicon nitride ($Si_3N_4$), gallium nitride (GaN), zirconium nitride (ZrN), polyaluminum chloride ($[Al_2(OH)_nCl_{6-n}]_m$, $1 \leq n \leq 5$, $m \leq 10$), trimethoxyaluminum, triethoxyaluminum, tri-n-propoxyaluminum, tri-i-propoxyaluminum, tri-n-butoxyaluminum, tri-i-butoxyaluminum, tri-sec-butoxyaluminum, tri-t-butoxyaluminum, trimethoxyboron, triethoxyboron, tri-n-propoxyboron, tri-i-propoxyboron, tetramethoxysilane, tetraethoxysilane, tetra-n-propoxysilane, tetra-i-propoxysilane, tetra-n-butoxysilane, tetra-i-butoxysilane, tetra-n-butoxysilane, tetra-sec-butoxysilane, tetra-t-butoxysilane, methyltrimethoxysilane, ethyltrimethoxysilane, propyltrimethoxysilane, methyltriethoxysilane, ethyltriethoxysilane, propyltrimethoxysilane, propyltriethoxysilane, paraffin wax and polyvinyl alcohol.

The additive treatment is preferably one or more selected from the group consisting of a method in which a solidifying agent and a binder are mixed with the mixture, a method in which a solidifying agent is mixed with the mixture and a method in which a binder is mixed with the mixture, more preferably a method in which a solidifying agent and a binder are mixed with the mixture.

The production method of the present embodiment may repeat the mixing step and the forming step. The production method may include a mixing step under similar conditions, except that a green body obtained in the forming step is used instead of the continuous ceramic fiber. For example, the production method of the present embodiment can include a mixing step and a forming step performed one or more times and five or less times.

The method for producing a CMC of the present embodiment may include, prior to firing the green body, a calcination step of calcining the green body to provide a calcined body.

In the calcination step, the green body is calcined to provide the calcined body. The calcination conditions are only required to be conditions under which necking between the particles of the matrix source proceeds. For example, the calcination conditions include the following conditions.

Calcination atmosphere: oxidizing atmosphere or inert atmosphere, preferably air atmosphere.
Calcination temperature: 800°C or higher or 850°C or higher, and lower than 1,000°C or 900°C or lower

The calcination time may be freely changed in accordance with the size of the green body and the performance of the calcination furnace used, and is, for example, 30 minutes or more and 120 hours or less.

In the production method of the present embodiment, the calcined body may further be subjected to a mixing step. The mixing step may be performed under the same conditions as those described above, except that the calcined body is used instead of the green body. The calcined body after mixing with the matrix slurry may be calcined by any method.

When the method for producing the CMC of the present embodiment includes the calcination step, the calcined body may be subjected to firing instead of a green body.

The production method of the present embodiment includes a step of firing the green body (hereinafter, also referred to as a "firing step"). Thereby, the CMC of the present embodiment is provided. When the production method of the present embodiment includes the calcination step, the calcined body may be subjected to firing instead of the green body. The firing is required to be performed under conditions that allow the sintering of the matrix source to proceed. For example, the firing conditions include the following conditions.

Firing atmosphere: oxidizing atmosphere or inert atmosphere, preferably air atmosphere.
Firing temperature: 1,000°C or higher, 1,100°C or higher or 1,200°C or higher, and 1,500°C or lower, 1,450°C or lower or 1,400°C or lower.
Number of firing cycles: 1 or more and 5 or less.

The firing time may be freely changed in accordance with the size of the green (or calcined) body and the characteristics of a firing furnace used. The firing time is, for example, 30 minutes or more and 120 hours or less. When firing is performed multiple times, the firing atmosphere and the firing temperature may be set to any desired conditions.

For ease of operation, the calcination is preferably performed under normal pressure. In the present embodiment, the term "normal pressure firing" refers to a method in which a target object (such as a green body or calcined body) is fired by heating without applying an external force.

EXAMPLES

While the present embodiment will be described in detail below with reference to examples, the present embodiment is not limited to these examples.

(SEM Observation)

A continuous ceramic fiber was placed on a carbon tape in such a manner that the surface of the continuous ceramic fiber in the longitudinal direction was an observation surface, and subjected to gold (Au) vapor deposition. The resulting fiber was observed with an SEM to obtain a surface SEM observation image. A cross-sectional SEM observation image was obtained by SEM observation in the same manner as for the surface SEM observation image, except that a resin-embedded continuous ceramic fiber was cut and placed on a carbon tape in such a manner that the cut surface was an observation surface, and subjected to gold vapor deposition to provide a measurement sample.

The SEM observation was performed using a scanning electron microscope (device name: JSM-7600F, manufactured by JEOL Ltd.) as a measuring device under the following conditions.

Acceleration voltage: 5 kV
Observation magnification: 5,000×

Prior to the measurement of a surface different composition region and the like described below, the surface SEM observation image and the cross-sectional SEM observation image were each binarized using image analysis software (software name: ImageJ, manufactured by the National Institutes of Health, USA).

(Presence Proportion of Surface Different Composition Region)

The surface SEM observation image was analyzed using image analysis software (software name: ImageJ, manufactured by the National Institutes of Health, USA) to determine Sf and S, and then the presence proportion was calculated from the following formula (1).

$$\theta = 100 \times S/Sf \qquad (1)$$

In formula (1), $\theta$ is the presence proportion [%] of the surface different composition region. Sf is the measured surface area [$\mu m^2$] of the continuous ceramic fiber. S is the surface area [$\mu m^2$] of the surface different composition region in the measured surface area.

(Average Thickness of Surface Different Composition Region and Coefficient of Variation of Surface Different Composition Region)

A cross-sectional SEM observation image was used. The circumference of a cross section of a continuous ceramic fiber was divided into 8 to 16 equal parts, which were used as measurement points. The thickness ($t_n$) of a surface different composition region at each measurement point was measured using image analysis software. The measurement was performed using a plurality of continuous ceramic fibers. The total number of measurement points was $50 \pm 10$. From the resulting thicknesses of the surface different composition region, the average thickness of the surface different composition region was calculated using the following formula (2).

$$t_{ave} = (t_1 + t_2 + ... + t_n)/n \qquad (2)$$

In formula (2), $t_{ave}$ is the average thickness [nm] of the surface different composition region, and $t_n$ is the thickness [nm] of the surface different composition region at each measurement point.

The coefficient of variation of the thickness of the surface different composition region was calculated using the following formula (3).

$$CV = 100 \times \sigma/t_{ave} \qquad (3)$$

In formula (3), CV is the coefficient of variation [%] of the thickness of the surface different composition region. $\sigma$ is the standard deviation [nm] of the thickness ($t_n$) of the surface different composition region at each measurement point. $t_{ave}$ is the average thickness [nm] of the surface different composition region.

(Single Fiber Strength)

The single fiber strength was measured by a method according to JIS R 1657. The measurements were performed using a strength tester (device name: AG-XPlus, manufactured by Shimadzu Corporation) and a tensile test jig at a loading rate of 0.5 mm/min. The number of measurements was 30, and the average value was defined as the single fiber strength.

(Heat Exposure Treatment)

A continuous ceramic fiber was subjected to heat treatment at 1,200°C for 100 hours in an air atmosphere. This heat treatment was defined as heat exposure treatment.

(Strength Retention Ratio)

The ratio [%] of the single fiber strength of a continuous ceramic fiber after heat exposure treatment to the single fiber strength of the continuous ceramic fiber before the heat exposure treatment was determined. This ratio was defined as a strength retention ratio.

(TEM-EDS Observation)

A continuous ceramic fiber was subjected to TEM-EDS observation with a typical transmission electron microscope (device name: JEM-2100F, manufactured by JEOL Ltd.) and an energy dispersive X-ray spectrometer (device name: JED-2300T, manufactured by JEOL Ltd.) under the following conditions.

Acceleration voltage: 200 kV

Observation magnification: 1,000,000×

Prior to the measurement, the continuous ceramic fiber was treated with carbon vapor deposition and then sliced with a focused ion beam.

(Fiber Volume Fraction)

A fiber volume fraction was calculated from the mass of a continuous ceramic fiber, the density of the continuous ceramic fiber and the volume of a CMC according to the following formula (4).

$$V \ [\% \ by \ volume] \ = \ (V_f/V_{CMC}) \ \times \ 100 \quad (4)$$

$$V_f \ = \ m/\rho_f$$

$$V_{cmc} \ = \ A \ \times \ B \ \times \ t$$

In formula (4), V is the fiber volume fraction. $V_f$ is the volume of the continuous ceramic fiber. $V_{CMC}$ is the volume of the CMC. m is the mass [g] of the continuous ceramic fiber. $\rho_f$ [g/cm$^3$] is the density of the continuous ceramic fiber. A [cm] is the length of the CMC. B [cm] is the width of the CMC. t [cm] is the thickness of the CMC.

(Density)

According to a method in accordance with JIS R 1634, the actual density of the CMC was determined from the rate (g/cm$^3$) of the volume measured by Archimedes' method to the mass measured with an electronic balance. Prior to the measurement, the mass of the dried CMC was measured, and then the CMC was boiled in pure water for 3 hours as a pretreatment.

(Tensile Strength)

The tensile strength of a CMC was measured by a method according to JIS R 1656. The measurement was performed twice with a strength tester (device name: AG-XPlus, manufactured by Shimadzu Corporation) and a tensile test jig at a loading rate of 0.5 mm/min. The average value was defined as the tensile strength of the CMC.

Prior to the measurement, aluminum tabs were attached to both ends of a CMC measuring 10 ± 1 mm in width, 110 ± 10 mm in length and 2 ± 1 mm in thickness, thereby preparing a test piece for a tensile test. The width and the thickness of the test piece for a tensile test were measured with a micrometer, and the length of the test piece was measured with a vernier caliper.

(Production of Continuous Ceramic Fiber with Surface Different Composition Region Containing Surface Metal Element)

(Example A1)

200 mg of phosphonoacetic acid (HOCOCH$_2$PO(OH)$_2$) was dissolved in 250 mL of ethanol to prepare a coupling solution (solution of phosphonoacetic acid in ethanol). A commercially available continuous alumina-mullite mixed fiber cloth (product name: Nextel-720, manufactured by 3M) that had been treated in an air atmosphere at 800°C was immersed in the coupling solution at room temperature for 24 hours, and then the continuous fiber cloth was heat-treated in an air atmosphere at 70°C. This resulted in a continuous alumina-mullite mixed fiber cloth having phosphonoacetic acid on its surfaces.

Next, 400 mg of ytterbium nitrate (Yb(NO$_3$)$_3$·4H$_2$O) was dissolved in 200 mL of ethanol to prepare a second salt solution (solution of ytterbium nitrate in ethanol). The resulting continuous fiber cloth was impregnated with a second salt solution, heated at 120°C for 1 hour, washed with ethanol, and heat treated by holding at 900°C for 2 hours in an air atmosphere. This resulted in a continuous alumina-mullite mixed fiber cloth having a surface different composition region containing ytterbium phosphate with an average region thickness of less than 50 nm.

(Example A2)

80 g of citric acid, 8 g of phosphoric acid and 40 g of ytterbium nitrate (Yb(NO$_3$)$_3$·4H$_2$O) were dissolved in 100 mL of pure water to prepare a first salt solution (aqueous solution of ytterbium nitrate). The continuous fiber cloth of Example A1 was immersed in the first solution, allowed to stand at room temperature for 5 minutes and then immersed in hot water at 60 ± 5°C for 5 minutes. Thereafter, the continuous fiber cloth was taken out of the hot water and washed with a sufficient amount of pure water. After the washing, the continuous fiber cloth was heat-treated by holding in an air atmosphere at 900°C for 2 hours.

This resulted in a continuous alumina-mullite mixed fiber cloth having a surface different composition region that contained ytterbium phosphate and that had an average region thickness of 213 nm. The presence proportion of the continuous fiber cloth was 100%.

(Example A3)

A continuous alumina-mullite mixed fiber cloth having a surface different composition region that contained lutetium phosphate and that had an average region thickness of 181 nm was produced in the same manner as in Examples A1 and A2, except that a first salt solution and a second salt solution containing lutetium nitrate instead of ytterbium nitrate were used.

(Example A4)

A continuous alumina fiber cloth having a surface different composition region that contained ytterbium phosphate and that had an average region thickness of 180 nm was produced in the same manner as in Examples A1 and A2, except that a continuous alumina fiber cloth (product name: Nextel-610, manufactured by 3M) was used instead of the continuous alumina-mullite mixed fiber cloth. The presence proportion of the continuous fiber cloth was 100%.

(Example A5)

A continuous alumina fiber cloth having a surface different composition region that contained lutetium phosphate and that had an average region thickness of 284 nm was produced in the same manner as in Examples A1 and A2, except that a first salt solution and a second salt solution containing lutetium nitrate instead of ytterbium nitrate were used, and a continuous alumina fiber cloth was used instead of a continuous alumina-mullite mixed fiber cloth. The presence proportion of the continuous cloth was 100%.

(Example A6)

80 g of citric acid, 8 g of phosphoric acid and 40 g of ytterbium nitrate ($Yb(NO_3)_3 \cdot 4H_2O$) were dissolved in 100 mL of pure water to prepare a first salt solution (aqueous solution of ytterbium nitrate). A commercially available continuous alumina fiber cloth that had been treated at 800°C in an air atmosphere was immersed in the first salt solution and allowed to stand at room temperature for 5 minutes. Thereafter, the cloth was immersed in hot water at 60 ± 5°C for 5 minutes and then washed with a sufficient amount of pure water. The continuous fiber cloth was heat-treated by holding in an air atmosphere at 900°C for 2 hours.

A continuous alumina fiber cloth having a surface different composition region that contained ytterbium phosphate and that had an average region thickness of 107 nm was obtained through these steps. The presence proportion of the surface different composition region was 15%.

(Example A7)

A continuous alumina fiber cloth having a surface different composition region containing lutetium phosphate was produced in the same manner as in Example A6, except that a first salt solution containing lutetium nitrate instead of ytterbium nitrate was used.

(Example A8)

A continuous alumina fiber cloth having a surface different composition region containing ytterbium phosphate was produced in the same manner as in Example A6, except that a continuous alumina-mullite mixed fiber cloth was used instead of the continuous alumina fiber cloth.

This resulted in a continuous alumina-mullite mixed fiber cloth was obtained having a surface different composition region that contained ytterbium phosphate and that had an average region thickness of 203 nm. The presence proportion of the continuous fiber cloth was 53%.

(Comparative Example A1)

A continuous alumina-mullite mixed fiber cloth having a surface different composition region that contained lanthanum phosphate and that had an average region thickness of 63 nm was produced in the same manner as in Examples A1 and A2, except that a first salt solution and a second salt solution containing lanthanum nitrate instead of ytterbium nitrate were used. The presence proportion of the continuous fiber cloth was 100%.

(Comparative Example A2)

A continuous alumina-mullite mixed fiber cloth having a surface different composition region that contained cerium phosphate and that had an average region thickness of 144 nm was produced in the same manner as in Examples A1 and A2, except that a first salt solution and a second salt solution containing cerium nitrate instead of ytterbium nitrate were used. The presence proportion of the continuous fiber cloth was 100%.

(Comparative Example A3)

A continuous alumina-mullite mixed fiber cloth having a surface different composition region that contained lanthanum phosphate and that had an average region thickness of 139 nm was produced in the same manner as in Example A6, except that a first salt solution containing lanthanum nitrate instead of ytterbium nitrate was used, and a continuous alumina-mullite mixed fiber cloth was used instead of the continuous alumina fiber cloth. The coverage of the continuous fiber cloth was 28%.

(Comparative Example A4)

A continuous alumina fiber cloth having a surface different composition region containing lanthanum phosphate was produced in the same manner as in Examples A1 and A2, except that a first salt solution and a second salt solution containing lanthanum nitrate instead of ytterbium nitrate were used, and a continuous alumina fiber cloth was used instead of the continuous alumina-mullite mixed fiber cloth.

(Comparative Example A5)

A continuous alumina fiber cloth having a surface different composition region that contained cerium phosphate and that had an average region thickness of 152 nm was produced in the same manner as in Examples A1 and A2, except that a first salt solution and a second salt solution containing cerium nitrate instead of ytterbium nitrate were used, and a continuous alumina fiber cloth was used instead of the continuous alumina-mullite mixed fiber cloth. The presence proportion of the continuous alumina fiber cloth was 100%.

The results of the examples and the comparative examples are presented in a table below.

[Table 1]

| | Continuous ceramic fiber | Surface metal element | Average region thickness | Presence proportion | Coefficient of variation |
| --- | --- | --- | --- | --- | --- |
| | | | [nm] | [%] | [%] |
| Example A2 | alumina-mullite mixed | Yb | 213 | 100 | 37 |
| Example A3 | alumina-mullite mixed | Lu | 181 | 100 | 83 |
| Example A8 | alumina-mullite mixed | Yb | 203 | 53 | 82 |
| Comparative Example A1 | alumina-mullite mixed | La | 63 | 100 | 14 |
| Comparative Example A2 | alumina-mullite mixed | Ce | 144 | 100 | 18 |
| Comparative Example A3 | alumina-mullite mixed | La | 139 | 28 | 125 |
| Example A4 | alumina | Yb | 180 | 100 | 15 |
| Example A5 | alumina | Lu | 284 | 100 | 92 |
| Example A6 | alumina | Yb | 107 | 15 | 94 |
| Example A7 | alumina | Lu | 196 | 38 | 109 |
| Comparative Example A4 | alumina | La | 203 | 100 | 21 |

(continued)

| | Continuous ceramic fiber | Surface metal element | Average region thickness | Presence proportion | Coefficient of variation |
| --- | --- | --- | --- | --- | --- |
| | | | [nm] | [%] | [%] |
| Comparative Example A5 | alumina | Ce | 152 | 100 | 14 |

[Table 2]

| | Single fiber strength [GPa] | | Strength retention ratio |
| --- | --- | --- | --- |
| | Before heat exposure treatment | After heat exposure treatment | [%] |
| Example A2 | 1.86 | 1.57 | 84.1 |
| Example A3 | 1.94 | 1.57 | 80.8 |
| Example A8 | 1.94 | 2.08 | 107.2 |
| Comparative Example A1 | 1.75 | 0.76 | 43.6 |
| Comparative Example A2 | 1.92 | 0.96 | 49.8 |
| Comparative Example A3 | 1.90 | 1.23 | 64.7 |
| Example A4 | 2.84 | 2.27 | 79.9 |
| Example A5 | 2.95 | 2.69 | 91.1 |
| Example A6 | 3.21 | 2.18 | 67.9 |
| Example A7 | 2.59 | 2.09 | 80.7 |
| Comparative Example A4 | 2.78 | 1.60 | 57.6 |
| Comparative Example A5 | 2.98 | 1.17 | 39.4 |

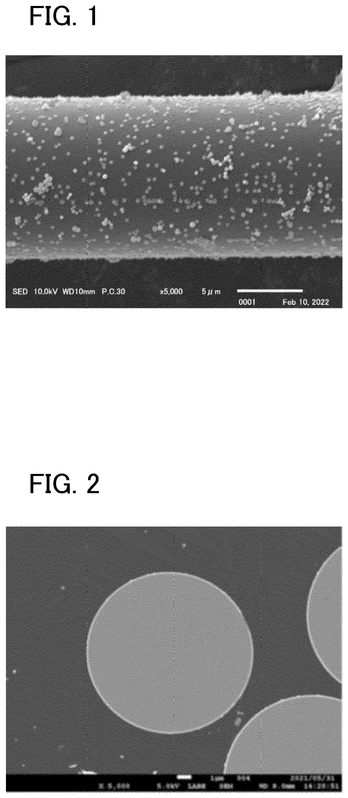

Fig. 1 is a surface SEM observation image in Example A6. The continuous ceramic fiber of Example A6 had the surface different composition region containing ytterbium phosphate on the surface of the continuous ceramic fiber. Furthermore, it can be seen that the surface different composition region is present on part of the surface of the continuous ceramic fiber. Fig. 2 is a cross-sectional SEM observation image in Example A2. The continuous ceramic fiber of Example A2 had the surface different composition region containing ytterbium phosphate on the surface of the continuous ceramic fiber. Furthermore, it can be seen that the surface different composition region covers the entire surface of the continuous ceramic fiber.

From Examples A2 and A3 and Comparative Examples A1 and A2, it can be seen that the continuous alumina-mullite mixed fibers of the examples in which each of the surface different composition regions contains the phosphate of the heavy rare-earth element have high strength retention ratios, compared with the continuous alumina-mullite mixed fibers having the surface different composition regions each containing the phosphate of the light rare-earth element, such as $LaPO_4$ or $CePO_4$. In each of Examples A2 and A3, the single fiber strength after the heat exposure treatment was 1.57 GPa, which indicated that the single fiber strength after the heat exposure treatment was high.

Similarly, from Examples A4 to A6 and Comparative Example A5, it can be seen that the continuous alumina fibers of the examples in which each of the surface different composition regions contains the phosphate of the heavy rare-earth element have high strength retention ratios, compared with the continuous alumina fiber having a surface different composition region containing the phosphate of the light rare-earth element. In Examples A4 and A5, the single fiber strengths after the heat exposure treatment were 2.27 GPa and 2.69 GPa, respectively, which indicated that the single fiber strengths after the heat exposure treatment were high.

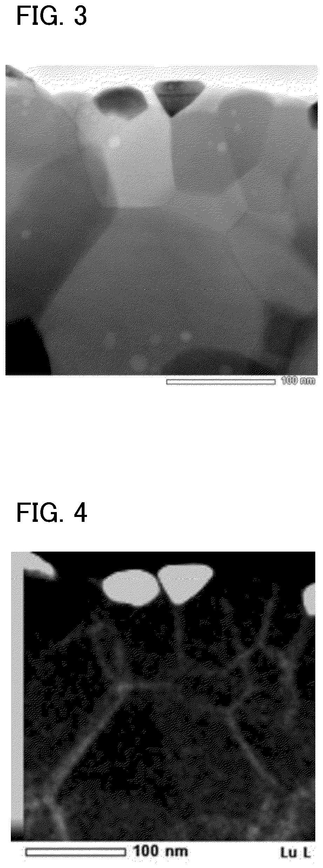

Figs. 3 and 4 illustrate a TEM observation image and an elemental mapping of lutetium by EDS in the ceramic continuous fiber constituting the ceramic continuous fiber having the surface different composition region containing $LuPO_4$ of Example A5 after heat exposure treatment. It was found that lutetium was present on the grain boundaries of the crystal grains constituting the continuous ceramic fiber and thus lutetium was diffused in the grain boundaries.

(Production of CMC)

(Example E1)

90 g of an $\alpha$-alumina powder (average particle size: 0.2 $\mu$m) and 3 g of a spherical silica powder (average particle size: 0.24 um) serving as an inhibitor source were mixed to prepare a mixed powder. The mixed powder was mixed with 29 g of pure water to prepare a matrix slurry. The mixing was performed for 24 hours in a ball mill using alumina balls having a diameter of 10 mm. The resulting matrix slurry had a solid concentration of 75 mass%.

The continuous alumina fiber cloth having the surface different composition region containing lutetium phosphate of Example A5 was impregnated with the matrix slurry to provide a mixture. The mixture was solidified by subjecting it to heat treatment twice at 120°C $\pm$ 10°C for 6 $\pm$ 2 hours, resulting in a green body having a width of 130 mm, a length of 110 mm and a thickness of 2 mm.

The green body was heat-treated in air atmosphere at 900°C to form a calcined body. The calcined body was heat-treated at 1,100°C in an air atmosphere and then cooled to room temperature, thereby resulting in a CMC of the present example. The CMC of the present example was a CMC containing alumina serving as a matrix, the continuous alumina fiber cloth, serving as a continuous ceramic fiber, having the surface different composition region that contained lutetium phosphate and that had an average region thickness of 284 nm and silica serving as an inhibitor. The CMC had a fiber volume fraction of 34.5% by volume and a density of 2.7 g/cm$^3$.

(Comparative Example E1)

A CMC of the present comparative example was produced in the same manner as in Example B1, except that the continuous alumina fiber cloth having a surface different composition region containing cerium phosphate of Comparative Example A5 was used. The CMC of the present example was a CMC containing alumina serving as a matrix, the continuous alumina fiber cloth, serving as a continuous ceramic fiber, having the surface different composition region containing cerium phosphate and silica serving as an inhibitor. The CMC had a fiber volume fraction of 35.5% by volume and a density of 2.7 g/cm$^3$.

The results of the CMC obtained in the example and the comparative example are presented in a table below.

[Table 3]

|  | Fiber volume fraction | Density | Tensile strength |
|---|---|---|---|
|  | (%) | (g/cm$^3$) | (MPa) |
| Example B1 | 34.5 | 2.7 | 231 |
| Comparative Example B1 | 35.5 | 2.7 | 178 |

The CMC of Example B1 contained the continuous alumina fiber having the surface different composition region containing lutetium phosphate and thus had a higher tensile strength than the comparative example, with the tensile strength being 231 MPa.

The entire contents of the specification, claims, drawings, and abstract of Japanese Patent Application No. 2022-042764 filed on March 17, 2022, are cited and incorporated herein as the disclosure of the specification of the present disclosure.

**Claims**

1. A continuous ceramic fiber comprising a region containing at least one of ytterbium and lutetium on a surface of the continuous ceramic fiber.

2. The continuous ceramic fiber according to Claim 1, wherein the region has an average thickness of 50 nm or more.

3. The continuous ceramic fiber according to Claim 1 or 2, wherein a presence proportion of the region is 10% or more.

4. The continuous ceramic fiber according to any one of Claims 1 to 3, wherein the continuous ceramic fiber contains at least one of ytterbium and lutetium as an inorganic acid salt.

5. The continuous ceramic fiber according to Claim 4, wherein the inorganic acid salt is one or more selected from the group consisting of a phosphate, a silicate, a nitrate, a carbonate and a sulfate.

6. The continuous ceramic fiber according to any one of Claims 1 to 5, wherein the continuous ceramic fiber is one or more selected from the group consisting of a continuous silicon carbide fiber, a continuous alumina fiber, a continuous mullite fiber and a continuous alumina-mullite mixed fiber.

7. The continuous ceramic fiber according to any one of Claims 1 to 6, wherein a single fiber strength is 1.0 GPa or more.

8. A ceramic matrix composite, comprising the continuous ceramic fiber according to any one of Claims 1 to 7.

9. A method for producing a continuous ceramic fiber according to any one of Claims 1 to 7, comprising the steps of bringing a continuous ceramic fiber into contact with a solution containing a salt containing at least one of ytterbium and lutetium, an organic acid and an inorganic acid, bringing the continuous ceramic fiber into contact with a protic solvent at 20°C or higher and 100°C or lower and heat-treating the continuous ceramic fiber.

10. The method for producing a continuous ceramic fiber according to Claim 9, wherein the continuous ceramic fiber includes a region containing at least one of ytterbium and lutetium and having an average thickness of less than 50 nm on a surface of the continuous ceramic fiber.

11. A method for producing a ceramic matrix composite, comprising a composite step of combining the continuous ceramic fiber according to any one of Claims 1 to 7 with a ceramic matrix.

FIG. 1

FIG. 2

## FIG. 3

## FIG. 4

## INTERNATIONAL SEARCH REPORT

| International application No. |
|---|
| **PCT/JP2023/009861** |

### A. CLASSIFICATION OF SUBJECT MATTER

***D06M 11/71***(2006.01)i; ***C04B 35/80***(2006.01)i; ***D06M 11/55***(2006.01)i; ***D06M 11/65***(2006.01)i; ***D06M 11/76***(2006.01)i; ***D06M 11/79***(2006.01)i

FI:    D06M11/71; C04B35/80; D06M11/55; D06M11/65; D06M11/76; D06M11/79

According to International Patent Classification (IPC) or to both national classification and IPC

### B. FIELDS SEARCHED

Minimum documentation searched (classification system followed by classification symbols)

D06M10/00-11/84; D06M16/00; D06M19/00-23/18; C04B35/80-35/83

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2019/103145 A1 (IHI CORPORATION) 31 May 2019 (2019-05-31) paragraphs [0010], [0051] | 1-8, 11 |
| A | | 9, 10 |
| X | WO 2010/143608 A1 (JAPAN ULTRA-HIGH TEMPERATURE MATERIALS RESEARCH INSTITUTE) 16 December 2010 (2010-12-16) claims, experiment example 2 | 1-8, 11 |
| A | | 9, 10 |
| P, X | WO 2022/065205 A1 (TOSOH CORP) 31 March 2022 (2022-03-31) claims | 1-11 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 May 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/009861**

| Patent document cited in search report | | | Publication date (day/month/year) | Patent family member(s) | | | Publication date (day/month/year) |
|---|---|---|---|---|---|---|---|
| WO | 2019/103145 | A1 | 31 May 2019 | EP | 3719197 | A1 | |
| | | | | paragraphs [0010], [0050] | | | |
| | | | | US | 2020/0277727 | A1 | |
| | | | | CN | 111566277 | A | |
| | | | | CA | 3083255 | A | |
| | | | | RU | 2751775 | C | |
| WO | 2010/143608 | A1 | 16 December 2010 | (Family: none) | | | |
| WO | 2022/065205 | A1 | 31 March 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020203484 A

- JP 2022042764 A

**Non-patent literature cited in the description**

- *J. Am. Ceram. Soc.*, 2008, vol. 91 (7), 2117-2123